Europäisches Patentamt

European Patent Office

Office européen des brevets

(11) Publication number: **0 265 649**

**A1**

# EUROPEAN PATENT APPLICATION

(21) Application number: 87113512.5

(22) Date of filing: 16.09.87

(51) Int. Cl.⁴: **B23Q 3/155** , B23B 5/16

(30) Priority: 26.09.86 IT 2183886

(43) Date of publication of application:
04.05.88 Bulletin 88/18

(84) Designated Contracting States:
AT CH DE FR GB LI

(71) Applicant: M.I.L.T. MACCHINE INDUSTRIALI
LAVORAZIONE TUBI S.r.l.
C.so Venezia n. 61
I-20121 Milano(IT)

(72) Inventor: Bornancin, Domenico
Via Dei Pioppi No.8
I-28044 Verbania Intra Novara(IT)

(74) Representative: Coloberti, Luigi
Via E. de Amicis No. 25
I-20123 Milano(IT)

(54) **Device for automatically changing the toolplates in pipe-working machines.**

(57) A device for automatically changing toolplates
(l2) in pipe-working machines.

The device comprises a movable supporting unit
(22) for supporting at least one toolplate (l2) and a
gripping head (l8) for removing the plates (l2), said
head (l2) being provided with pliers (25) for gripping
the plates (l2). The head (l8) is rotatably supported
around an axis parallel to the spindles (l3) of the
working machine which can slide lengthwise in order
to engage and respectively disengage the toolplates
(l2) of the spindle (l3) and of the supporting unit (22),
as well as to reverse the positions of the toolplates
(l2) with respect to one another, whenever an old
plate (l2) with worn out tools must be replaced with a
plate (l2) provided with new tools. Transfer means
(20, 2l) are provided for transferring the plate-sup-
porting units (22) from a position above the spindles
(l3) of the machine in which the plates (l2) are
replaced, to a holding position and towards a plate
servicing position.

Fig. 1

## Device for automatically changing the toolplates in pipe-working machines.

This invention refers to a device for automatically changing toolplates, in pipe-working machines, in particular in machines for heading, threading or chamfering the ends of metal plates, in which the pipe is machined at one or both ends by means of tools provided on a supporting plate secured to a spindle of a machine tool in a per sè known way.

In pipe machining operations, each pipe is secured with its ends axially aligned to a rotating spindle provided, in a per sè known way, with a toolplate; the spindle is mounted on a slide movable on guides towards and away from the end of the pipe to be machined. In a typical application, for example, for chamfering the ends of the pipe, the plate is provided with three tools which are adjustably and interchangeably secured to the plate. Each plate is also provided, on the side opposite that of the tools, with a tapered bush for centering and securing to the spindle of the machine.

As a rule, in automatic pipe machining operations, one toolplate is replaced with another when the tools of the former are worn out, or when the tools are to be adjusted to adapt them for different machining operations and/or diameters of the plates to be machined. At present, the replacement of the old plates with new ones is carried out manually by an operator who has to fit the plate with the new tools and then, just before changing it, stop the machine, remove the old plate with the worn out tools, and replace it with the new plate. Bearing in mind that automatic pipe-working machines are provided with several spindles which operate simultaneously, at both ends of the pipes, and that these machines form part of a complete production line which has to be stopped every time the plates are to be changed, it is clear that this operation proves to be extremely laborious and time-consuming, also in view of the considerable weight of the toolplates to be handled manually which, in certain cases, can be as much as, or even more than, 100 Kg. In general, the manual operation of replacing the plates calls for a stoppage of the plant which can be estimated at around 5 to 10 minutes and which, in terms of productivity of the plant, is equivalent to the loss of a bundle of approximately 400 machined pipes. At present, there are no known tool-changing devices suitable for the aforesaid type of machines.

The scope of this invention is to provide a device for automatically changing toolplates, in pipe-working machines, by means of which it is possible to change one or more toolplate simultaneously, at one or both ends of the pipe to be machined, according to a sequence of controllable conditions and phases which can be carried out extremely rapidly, within a matter of a few dozen seconds. With the tool-changing device according to this invention, a single operation can very quickly change all the tools of a machine, thereby substantially reducing machine times and increasing the productivity of the entire plant of which the machine normally forms part.

A further scope of this invention is to provide a device for automatically replacing the toolplates, as defined above, in which the toolplate which is removed from a spindle of the machine can be shifted to a servicing position, within easy reach of an operator, wherein all the tools on the plate can be easily replaced and/or adjusted.

With the device of this invention all the operations for transferring and replacing the toolplates can be monitored and coordinated by a central control unit which receives control signals emitted by appropriately-disposed sensing means, indicating the various states or conditions of the various phases according to which the plate-changing operations are carried out.

These and further features and advantages of the device according to this invention will ensue from the following description of a particular embodiment of the invention defined in the main claim; in the drawings:

Fig. 1 shows a side view of a pipe-working machine, provided with a toolplate changing device according to this invention;

Fig. 2 shows a front view of the machine of figure 1;

Fig. 3 shows a view similar to that of the previous figure, with some parts removed, following the replacement of the plates;

Fig. 4 shows a schematic longitudinal cross-sectional view of the operating head of the machine, close to a spindle;

Fig. 5 shows a perspective view of the plate-removing head and the various control members;

Fig. 6 shows a front view of a pair of pliers at one end of the plate-removing head;

Fig. 7 shows a schematic perspective view of the two-spindle assembly of the machine with the relative toolplates, the spare plates, and the plate-removing head with the control members of the pliers for gripping the plates;

Fig. 8 shows a perspective view of the device for horizontal movement of a movable plate-supporting unit;

Fig. 9 shows a cross-sectional view along the line 9-9 of figure 8;

Fig. 10 shows the device for vertical movement of the plate-supporting unit;

Figs. 11 and 12 show a longitudinal cross-sectional view and, respectively, a cross-sectional view of part of the device for horizontal movement and of the plate-supporting unit, showing the automatic hooking and releasing system of the supporting unit;

Figs. 13 and 14 show schematic views of the hooking and releasing devices of the supporting unit of the previous figures, in the two operative positions;

Figs. 15 and 16 show schematic views of the tip-up device of the plate containers.

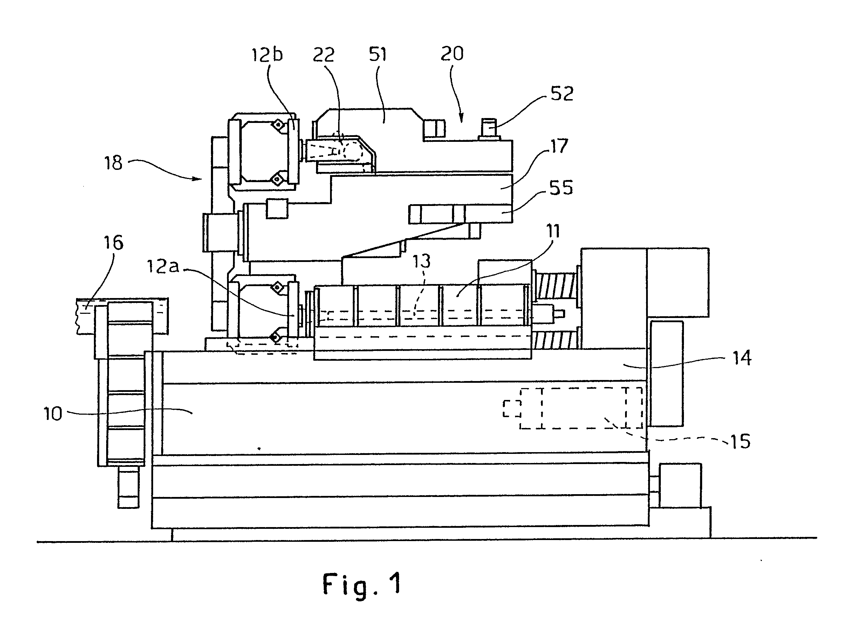

Referring now to the drawings, and in particular to figures 1, 2 and 3, the numerical reference 10 indicates in general a standard pipe-facing machine, for example, for chamfering, threading or other operations, comprising a slide 11 provided with a head 11a for supporting one or more toolplates 12, two in the case shown, each of which is secured to the end of a spindle 13. Each spindle 13 is disposed with a horizontal axis so that the relative toolplate 12 lies in a substantially verticle plane. The slide 11 is movable along horizontal guides 14 and is actuated during its stroke, for example, by a hydraulic control cylinder 15 in order to move from a rearward position, shown in figure 1, also referred to as plate-changing position, to a forward or working position in which the corresponding end of a metal pipe 16 is machined, in a per sè known way.

In the automatic machining of pipes by means of machines of the aforementioned type, which form part of large plates which are required for high outputs, the plates must be replaced whenever the tools are worn out or whenever a different type of machining operation is required; if the plate changing operation takes an excessively long time to carry out, it has a negative affect on the operation and productivity of the entire plant. Consequently, according to this invention, the machine 10 has been provided with an automatic device for replacing the plates, which is capable of carrying out a whole sequence of operations and phases for replacing the old plates with worn tools, with new ones, in a controlable way by a control unit belonging to the device, or to the whole machine of which the device forms part.

General description of the plate-changing device

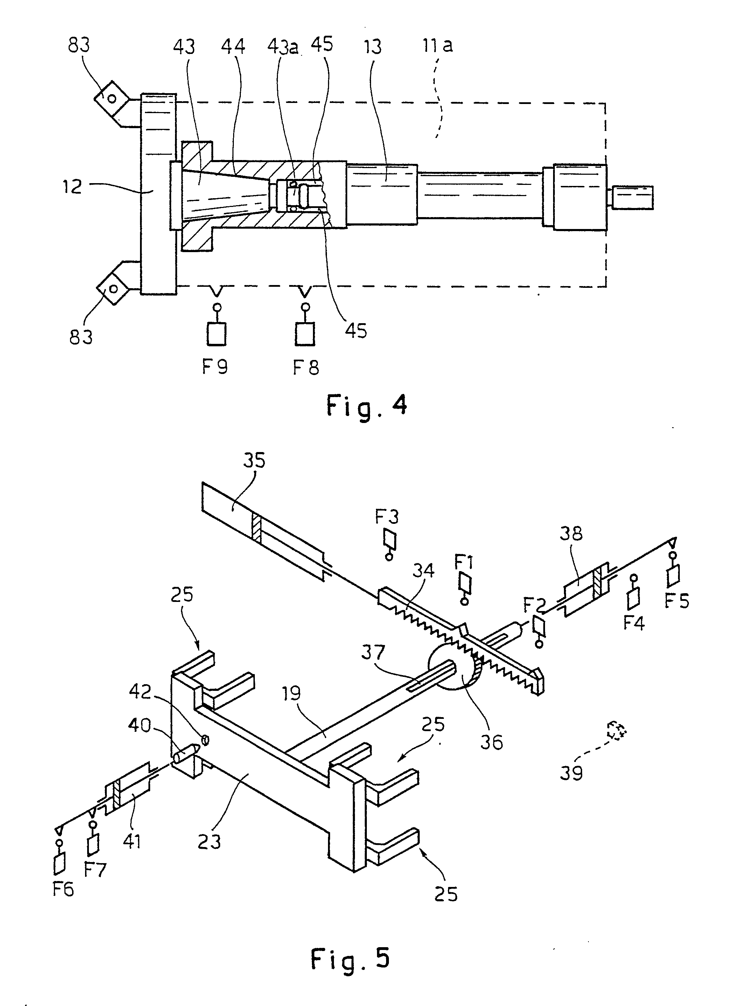

The device comprises a supporting structure 17 disposed and secured to the side of the structure of the machine 10. The structure 17 extends over the machine 10 to support a plate-removing device 18 having a plier-supporting head rotatingly supported and sliding along a horizontal axis 19, parallel to and above the axes of the spindles 13. The plier-supporting head of the device 18 represented in the figures 5, 6 and 7, can be rotated by an angle of 90°, in either direction, and can be moved from a forward plate-gripping position to a rearward or rest position, in order to remove the plates 12 from the spindles 13 and transfer them to a horizontal transfer device 20 co-operating with a verticle transfer device 21 capable of transferring the old plates with the worn-out tools to a servicing position, that is to say, at a height within easy reach of the operator.

The plate-changing device removes the old plates 12a from the spindles 13 and simultaneously removes the new plates 12b from the horizontal transfer device, and vice versa, after having reversed its position, it fits the new plates into the spindle 13 and simultaneously fits the old plates into the horizontal transfer device 20, as explained further on.

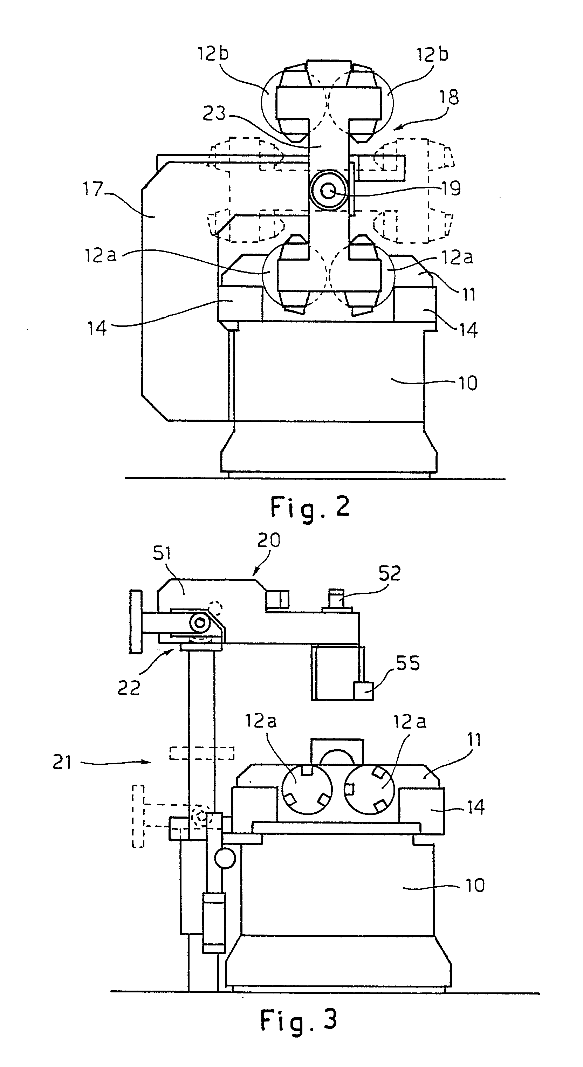

Correspondingly, the vertical transfer device 21, wherever required, removes a plate holder unit 22 from the horizontal transfer device 20, as shown by the continuous line in figure 3, and carries it down towards a lower servicing position, as shown by the dotted lines in figure 3, and vice versa, lifts the plate holder unit 22 from the lower operating position to the upper operating position. The various plate-changing phases, that is to say the various movements of the devices for gripping and transferring the tool-plates, are controlled automaticaly by means of a central control unit, not shown, which receive control signals from a set of limit switches, microswitches, photoelectric cells or similar sensing devices, which define the conditions of the various moving parts of the apparatus. The automatic plate-changing operation is started up whenever necessary by an operator who presses a special pushbutton situated on the console of the machine, which starts up the whole automatic sequence of operations for replacing the plates.

The plate-gripping device

The structure of the device 18 is illustrated - schematically hereunder, with reference to figures 5, 6 and 7. The device 18 comprises a double T-shaped rotating head 23, in the case of the simultaneous replacement of two toolplates, the ends of which are provided with two pairs of aligned pliers 25 for gripping the plates 12, these pliers are controlled simultaneously to open and close their respective jaws, for example, by means of a system of double-acting hydraulic cylinders 26 fed by a source of fluid under pressure 27 by means of a rotary distributor 28.

The plate-gripping pliers 25 may be made in any way: for example the pliers 25 can comprise two opposing jaws 29 sliding along guides 30 inside the head 23. Each jaw 29 is provided, at the rear, with a pin 31 sliding within a slanted groove 32 in al sliding plate 33, in which the two grooves 32 in each plate converge towards each other and outwardly, in the direction of their sliding axis, so that the jaws of each pliers are simultaneously controlled to close over a tool-plate or to open, thus releasing it.

The plier-supporting head 23 is secured to an end of the control shaft 19 which, as is shown in figure 5, is made to rotate and to slide longitudinally; in this connection, the rotational movement of the shaft 19 is obtained by means of a rack system capable of rotating the plier-supporting head by 90°, in either direction, starting from the horizontal disposition of the plier-supporting head 23 shown in the aforesaid figure. The control system therefore comprises a rack 34 controlled by a double-acting cylinder 35 in which the central position shown of its piston corresponds to the horizontal disposition of the plier-supporting head 23. The rack 23 meshes with a pinion 36 which in turn is engaged with the control shaft 19 by means of a longitudinal key 37 or other suitable means capable both of enabling the pinion 36 to turn the shaft 19, and of enabling the shaft 19 to slide longitudinally and independently with respect to the aforesaid pinion 36. The longitudinal sliding movement of the shaft 19 and, therefore, the horizontal displacement of the plier-supporting head 23 is in turn controlled by a double-acting cylinder 38 or by other suitable control means. The various conditions or phases are controlled by respective sensing means or limit switches F1, F2, F3, F4 and F5, as shown. Mechanical stop members, for example, defined by the ends of the control cylinder 35 and 38, or by specially provided stop members, as indicated - schematically by 39, for the rack 34, define the extreme sliding positions of the plier-supporting head 23, and the extreme angular positions of rotation of the aforesaid head. A pin 40 is controlled by a cylinder 41 to fit into a hole 42 in the plier-supporting head 23 in order to lock the latter in the horizontal operating position shown; the conditions of the locking pin 40 are sensed by and controlled by sensing means F6 and F7.

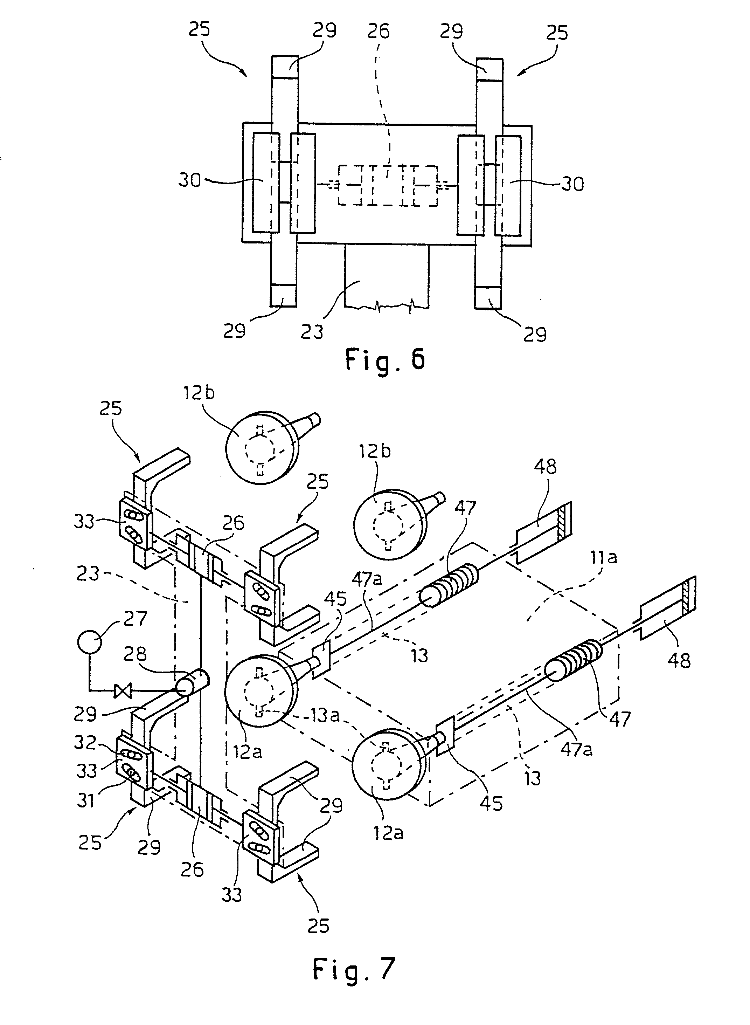

Lastly, figures 4 and 7 of the drawings show a - schematic representation of the system for locking the toolplates 12 to the spindles 13. Each toolplate 12, in a per sè known way, is provided with a tapered rear bush 43 for centering the toolplate, which fits into a tapered housing 44 in the spindle. The rear end of the centering bush 43 ends with a shank 43a which is held by an automatic clamp 45 operated, also in a per sè known way, by means of a system comprising Belleville washers 47 and control rods 47a actuated by double-acting cylinders 48 in order to open and, respectively, close the clamps 45, thus releasing and, respectively, locking the toolplates 12 on the spindles. Limit switches or sensing means F8 and F9 are provided in order to give control signals indicative of the conditions or positions of the slide 11 with the head 11a supporting the spindles.

Horizontal transfer device

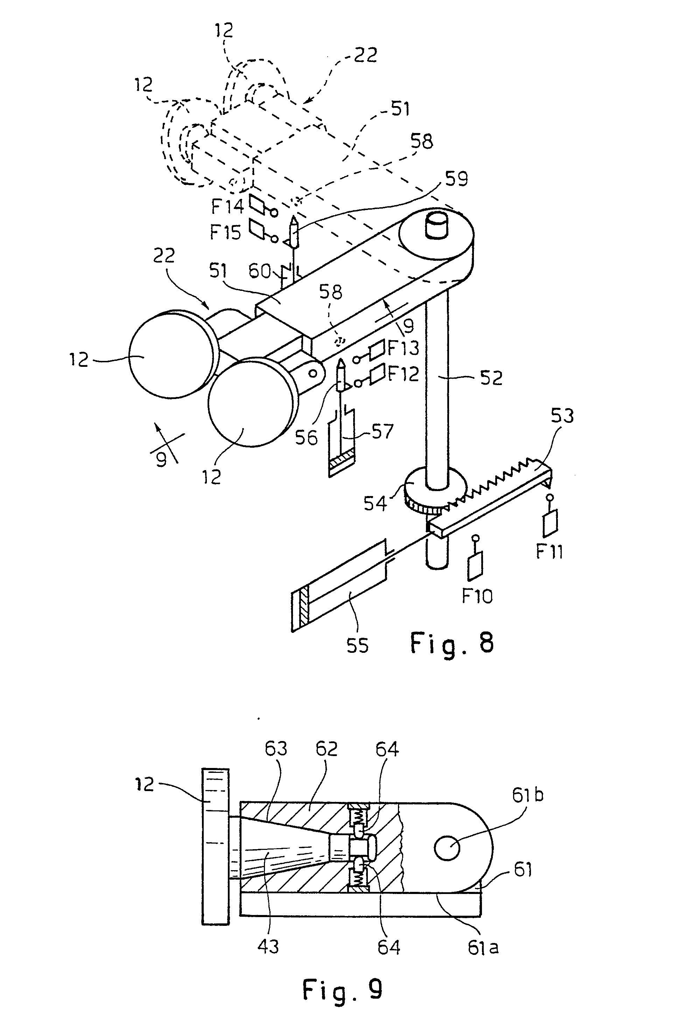

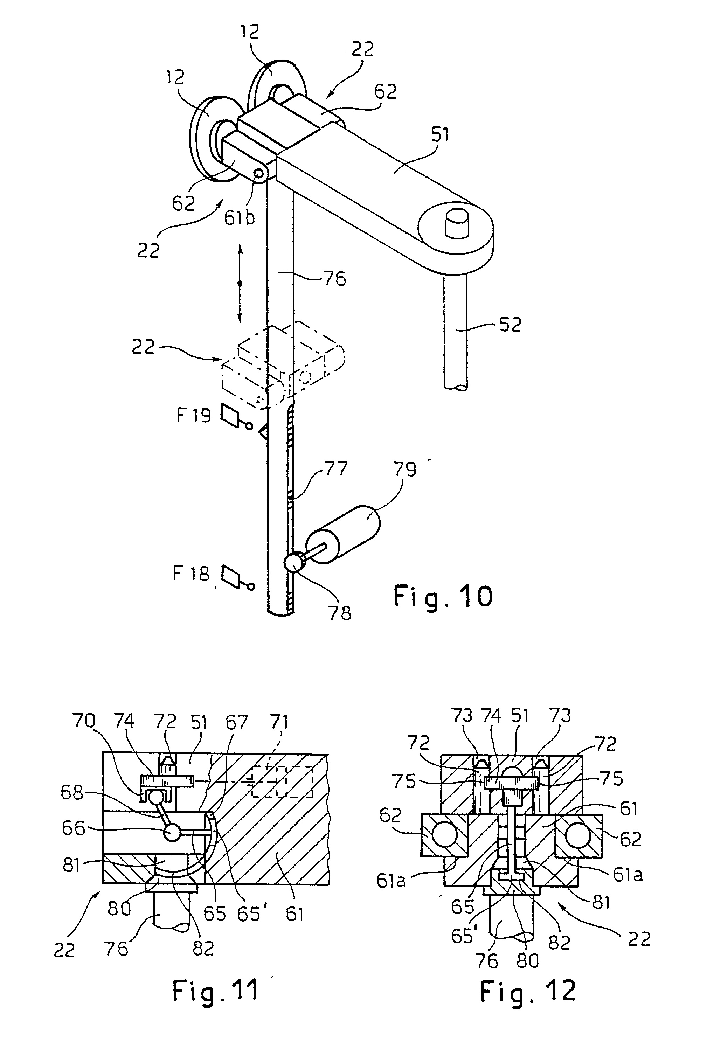

The device for horizontal traverse movement of the toolplates 12 is shown in the figures from 8 to 14. The device comprises a horizontal rotating arm 51 to which the movable plate-supporting unit 22 is secured; the arm 51 is connected to a verticle control shaft 52 which is operated to turn the transfer arm 51 angularly by an angle of 90°, for example by means of a rack control system comprising a rack 53 which meshes with a toothed pinion 54 connected to the control shaft 52. The rack 53 is made to move between the two operative positions defined by limit switches or sensing means F10 and F11, by a hydraulic cylinder 55 in which the ends of the chambers or heads of the cylinder define stop means for the pistons and, consequently, the stop positions of the rack rod 53. It is obvious however that in all the cases considered, the rack control systems and the stop means illustrated herein can be made differently as long as they are able to allow the operating phases of the entire apparatus to be carried out. A first locking pin 56 actuated by a hydraulic cylinder 57 and controlled by limit switches or sensing means F12 and F13 is fitted into a hole 58 in the transfer arm 51 to hold it in the operative position indicated by the dotted lines in figure 8 and, respectively, in figure 1, also referred to as plate-releasing or first delivery position, in which the plate-supporting unit 22 can receive and, respectively, transfer a pair of plates 12 to the plier-supporting head 23. A second pin 59 is fitted into the hole 58 in the transfer arm 51 whenever the latter is in the operative position rotated by 90° with respect to the previous one, which is also indicated by dotted lines in figure 8, and shown in figure 10, and referred to as stand or second delivery position in which the plate supporting unit 22 is in the condition to be engaged or released by the vertical transfer device of fig. 10; the second locking pin 59 is actuated by a double-acting cylinder 60 and controlled by two limit switches or sensing means F14 and F15, as in the previous case.

The movable plate-supporting unit 22 and the relative automatic locking devices are illustrated in figures 8, 9, II, I2, I3 and I4 of the accompanying drawings. The plate-supporting unit can be locked to the horizontal transfer device and, respectively, to the vertical transfer device; in particular, the plate-supporting unit 22, in the case illustrated here, comprises a central body 6I having sides onto which are hinged, by 6Ib, the tool-plate holders 62 for the plates, which rest against lateral shoulders 6Ia on the central body; each tool-plate holder 62 is provided with a tapered hole 63 designed to receive the tapered centering bush 43 of a toolplate, which is belt in place by the action of spring-loaded detent means 64. The central body 6I of the plate-supporting unit 22 comprises an automatic locking device to lock it to the horizontal transfer arm 5I and, respectively, to the vertical transfer device described further on. The locking device shown here comprises a hooking lever 65 supported by a pivot 66 on the central body 6I and ending with a T-shaped head 65' or equivalent hooking element, capable of engaging and disengaging, for the rotation of the lever 65, with a similarly-shaped arched groove 67 at the end of the horizontal transfer arm 5I. The hooking lever 65 is made to rotate from its operative position of figures II and I3 in which it locks the plate-supporting unit 22 to the arm 5I, to the operative position of figures I2 and I4 in which it locks the plate-supporting unit 22 to the vertical transfer device 2I, for example, by means of a small arm 68 ending with a rounded head 69 designed to engage and disengage, simply by means of the vertical displacement of the plate-supporting unit 22, with a hooking member 70 in the form of an upside down U-shaped sliding element, capable of also enabling a relative displacement of the head 69 of the control arm. The hooking member 70 is actuated by a hydraulic cylinder 7I and its two operative positions of figures I3 and I4 are controlled by limit switches or sensing means FI6 and FI7. The plate-supporting unit 22 is supported and centered beneath the transfer arm 5I, for example, by providing its central body 6I with two dowels 72 which fit into corresponding holes 73 in the arm 5I; a sliding plate 74, or other similar retaining element, for example, fastened to the hooking member 70, in the rearward position of figure I3, fits into slots 75 of the dowels 72 which are made on the internal side of the aforesaid dowels.

## Vertical transfer device

The vertical transfer device for the plate-supporting unit 22 is shown in figure 3 and in figures I0, II and I2 of the drawings. In the case shown, the device comprises a rod 76 which is moved vertically from an upper operative position for engaging and releasing the plate-supporting unit 22, to a lower operative servicing position, both of which are shown in figure 3, in order to remove the plate-supporting unit 22 from the arm 5I of the horizontal transfer device and to lower it to a working position within easy reach of an operator, and vice versa. The rod 76 is actuated for example by means of a rack system which comprises a rack 77 disposed longitudinally and to one side of the rod 76, which engages with a toothed pinion 78 secured to the shaft of an electric drive motor 79. The operative positions of the rod 76 are controlled by limit switches or sensing means FI8 and FI9. The vertical transfer rod is provided on its upper end with a tapered head 80 which fits into a tapered seat 8I which opens out from below into the central body 6I of the plate-supporting unit 22. The head 80 of the vertical transfer rod is provided with an arched transversal slot 82 which is T-shaped similar to the slot 67 in the horizontal transfer arm, which is designed to engage the T-shaped head 65' of the hooking lever 65 when the latter is rotated in the operative position of figure I4.

## Tip-up device of the toolplate holder

As shown in the various figures, when the plate-supporting unit 22 is lowered to the position accessible to the operator, the plates are facing sideways and with their axis horizontal; since the tools are secured to the front face of each plate which in that moment is disposed in a vertical plane, the replacement of the tools or any repairs which have to be carried out on the tools are made difficult by the position of the aforesaid plates. Consequently, a tip-up device is provided to close to lower servicing position of the vertical transfer device to tip-up or rotate the toolplate holders 62 on the movable unit 22 so as to arrange the plate I2 with their axis disposed vertically, and with the tools 83 on the upper horizontal face of the same plates. This tip-over device, which is schematically represented in figures I5 and I6, as well as in figure 3, comprises a lever arm 84 secured to the rotational axis 6Ib of the toolplate holders 62; the lever 84 ends with a head which fits into a U-shaped hooking member 86, and which is made to move horizontally from the first operative position of figure I5 in which the plates I2 have their axis disposed horizontally, to the second operative position

of figure I6 in which the plate holders 62 are tipped up or rotated upwards by 90° so that the plates I2 have their axis disposed vertically. The hooking member 86 can be actuated in any suitable way, for example by means of a hydraulic cylinder, or as shown, by means of a double-rack system comprising a first toothed rod 87 which meshes with a toothed pinion 88 of a countershaft 89 having a second pinion 90 meshing with a second toothed rod 9I which is differently disposed, for example, positioned at 90° with respect to the first one, and which in turn is connected to a double-acting control cylinder 92. The operative positions of the hooking member 86 are controlled by two limit switches or sensing means F20 and F2I.

Operating mode

A description is given hereunder of an automatic plate-changing sequence, assuming that it is necessary to replace the plates I2a of figures I and 7, hereinafter referred to as "old plates", with the plates I2b of the same figures, hereinafter referred to as "new plates" assuming, moreover, that the new plates are already positioned on the supporting unit 22 coupled to the arm 5I of the horizontal transfer device, and are disposed with their axes parallel to the axes of the spindles I3 of the machine I0. It is also assumed that the plier-supporting head 23 is in the horizontal resting position indicated by the dotted lines in figure 2, in which it allows the spindlehead IIa to move back and forth.

As mentioned previously, the operation for replacing the plates follows a sequence of conditions and phases whose progress can be monitored by a central control unit, not shown, which may be of any suitable type; the control signals that the central control unit receives from the various limit switches or sensing means describes herein constitute the conditions which control the transition from one operative condition to the next. Each movement of the various members or devices is consequential to the occurence of a particular condition sensed by the central control unit. The operation for replacing the plates is started up by the operator by pressing a special pushbutton which stops all the machining phases in progress to give way to the sequence of phases concerning the replacement of the plates.

Upon completion of the machining, and after the signal has been given to replace the plates, the spindlehead IIa with the old plates I2a is shifted backwards away from the working area and stopped outside the range of action of the plier-supporting head 23, in the condition shown in figure I. The "spindle back" signal sent by the limit switch F8 enables the rotation of the plier-supporting head 23.

The plier-supporting head 23 of the plate-removing device, as mentioned previously, is in the resting position with its longitudinal axis disposed horizontally and locked in this position by the lock-ing dowel 40 inserted into the hole 42.

Even though this resting position is signalled by the sensing means FI of the rack control of figure 5, it is advisable to lock the plier-supporting head 23 mechanically to ensure that no part of the head, in the event of its incorrect positioning, can accidentally interfere with the spindlehead IIa during its to and fro movement.

After the cylinder 4I has disengaged the lock-ing dowel 40, the plier-supporting head 23 can be made to rotate; this condition is signalled by the sensing means F6.

A signal is then sent to actuate the cylinder 35 whose piston, from the central position shown, moves forward thereby controlling, by means of the rack 34, the pinion 36 and the shaft I9, the 90° rotation in one direction, for example in the clockwise director in the figures, of the plier-supporting head 23 until it comes to rest with its longitudinal axis disposed vertically, as shown in figure 7. A mechanical stop, mentioned previously, stops the rack 34 thus enabling the exact positioning of the plier-supporting head 23 in the plate gripping and removing position. This condition is signalled by the sensing means F2 which activates the movement of the arm 23 with the pliers open, towards the old plates I2a and, respectively, towards the new plates I2b. This movement is controlled by the cylinder 38 which causes the plier-supporting head 23 to move forward towards the plates. The signal sent by the sensing means F5 (fig. 5) confirms the forward movement of the plier-supporting head 23 towards the plates.

Throughout the implementation of this phase, the toolplates I2a which are still rotating, must be stopped in a position in which the driving keys I3a of the respective spindles I3 are disposed vertically (fig. 7), that is to say, along the same axis as the usual slots provided at the rear of each plate in a per sè known way, which is carried out by a sensing means, not shown, of the machine; when the comparison between the signal given by this sensing means and the one given by the sensing means F5 is positive, the simultaneous closing of the pairs of self-centering pliers 25 by means of the control cylinders 26, is allowed. The closure of the pliers 25 can be signalled by an appropriate pressure switch, not shown, which senses the pressure of the fluid in the central chamber of the cylinders 26, or in any other way. The signal given by this pressure switch enables the operation of releasing the old plates 12a to be removed from the spindles.

As mentioned previously, the old plates 12a are locked onto the head 11a by a hydromechanical power-actuated clamping mechanism housed in each spindle 13, as is schematically indicated in figures 4 and 7. The clamping is carried out automatically by the action of Belleville washers 47 which act on the system of control rod 47a to close the jaws of the clamps 45 inside each spindle, whose unclamping is controlled by the hydraulic cylinder 48 which acts on the rods in the opposite direction to that of the Belleville washers 47. The opening of the clamps 45 on the spindles of the machine is signalled by a pressure switch on the control cylinder 48 which enables the removal of the plates.

The phase of removing the old plates 12a, which are now in an unclamped condition, and the new plates 12b which are held in the holders 62 simply by the elastically-biased detend means 64, occurs simultaneously for both pairs of plates. This operation is carried out by moving the plier-supporting head 23 backwards far enough for it to pull the centering cones of the plates out completely, until the sensing means F4 gives the "operation carried out" signal.

When the sensing means F4 has confirmed the removal of the two pairs of plates 12a and 12b, the plier-supporting head 23 is made to rotate by 180°, in the opposite direction to the previous one, so as to reverse the disposition of the old plates 12a, which are now above and aligned with the horizontal transfer device, and of the new plates 12b which are now below and aligned with the spindles 13 of the machine. To ensure the perfect centering of the plates, for the subsequent hooking phase, the rack 34 or the piston of the control cylinders 35 are stopped at their stroke end by a stop means for example of the type previously described. The plate centering or alignment position is signalled by the sensing means F3 whose signal enables the forward movement of the plier-supporting head, with the plates clamped to it, towards the spindles 13 and, respectively, towards the plate holders 62 of the movable supporting unit coupled to the horizontal transfer device. The cylinder 38 then controls the forward stroke of the plier-supporting head 23 until the tapered bushes of the plates are inserted completely into their respective housings and are automatically held in place by their respective retaining members 45 and 64. The sensing means F5 confirms the insertion of the plates and the subsequent phase for unlocking the pliers 25 then begins.

The pliers 25, controlled by the slides or sliding plates 33 and by the respective cylinders 26, open thus releasing the plates 12a and 12b; this condition is signalled by pressure switches on the control cylinders 26. The plier-supporting head 23 is then moved backwards by the control cylinder 38 and, when the sensing means F4 is activated, the rack 34 causes the head 23 to rotate by 90° in a clockwise direction, thus returning it to the horizontal resting position described previously, in which it is held in place by the insertion of the dowel 40. This situation is signalled by the sensing means F7 which gives the authorization for the slide 11 and spindlehead 11a to move forward to the working position, after which the machine 10 can be started up again.

Meanwhile, after the plier-supporting head 23 has changed plates and after the pliers have been unlocked, the operations of adjusting or replacing the tools on the old plates can begin.

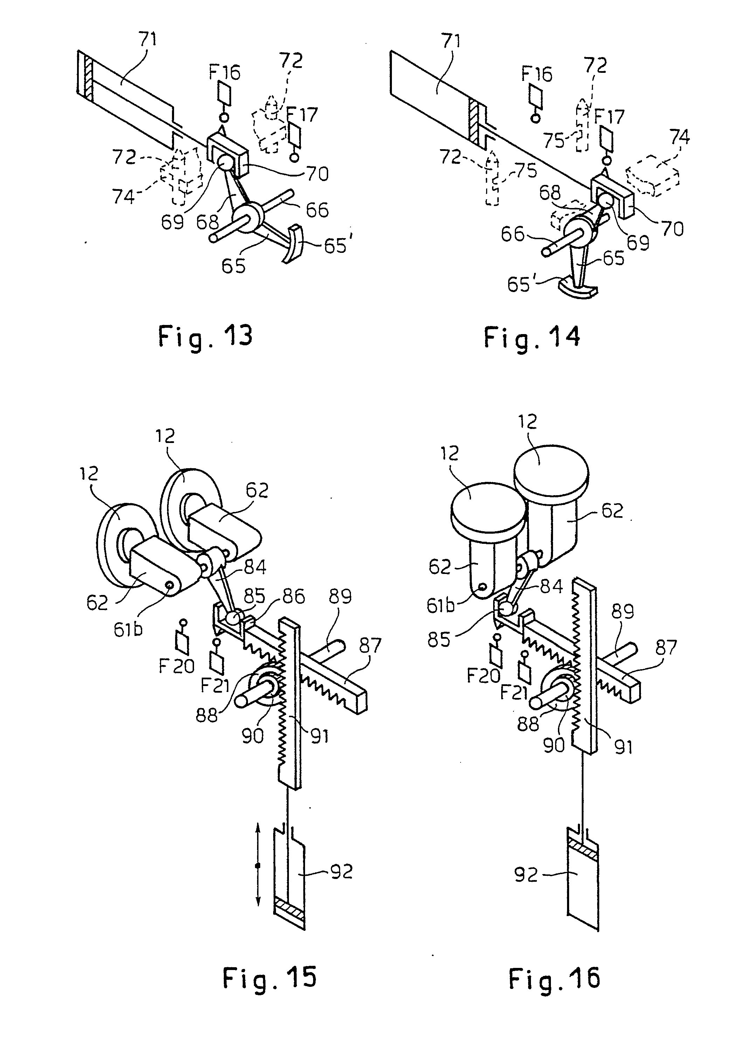

The plate-supporting arm 51 of the transfer device is still in the plate releasing position indicated by the continuous line in figure 8, in which it is facing in the direction of the plier-supporting head, that is to say, parallel to the spindles of the machine, since they are held in this position by the locking dowel 56. The arm 51 is then released by removing the dowel 56 and as soon as this condition is signaled by the sensing means F12, the arm 51 is made to rotate by 90° in a clockwise direction, thus coming to rest in the stand position indicated by the dotted lines in figure 8, or indicated in figure 10, to transfer the unit 22 with the old plates towards a servicing position or station where the tools 83 are adjusted or replaced. The rotation is carried out by means of the rack 53 controlled by the cylinder 55, and the position assumed by the arm 51 at the end of the rotation is signalled by the sensing means F10 which activates the insertion of the second locking pin 59 by means of its control cylinder 60. This condition is signalled by the sensing means F14. Next comes the phase of transferring the unit 22 supporting the old plates from the arm 51 of the horizontal transfer device, which is locked in the stand position shown, to a lower position or, in any case, towards a plate servicing station, where an operator can carry out the adjustment or replacement of the tools. In the case shown, the rod 76 of the vertical transfer device 21 is raised by means of the rack 77 and the drive motor 79. The rod 76 rises until its head 80 reaches the top and fits into the seat 81 in the central body 61 of the movable plate-supporting unit 22; this condition being signalled by the sensing means F19. At this point, the unit 22 is released from the arm 51 of the horizontal transfer device and locked to the head 80 of the vertical transfer rod. This operation is carried out by rotating the locking lever 65 by means of the cylinder 71, making said lever rotate downwards, that is to say, making it go from the position of figure 13 to the position of figure 14 in which the retaining member 65' at the end of the lever 65 fits into the arches slot 82 in the head 80. The plate 74 simultaneously slides off the dowel pins 72 thus releasing the plate-supporting unit. This condition is signalled by the sensing means FI7 which provides the control signal for the lowering of the rod 76 with the supporting unit 22 for the old plates.

The rod descends until it operates the sensing means FI8, stopping with the plates still arranged with their axes disposed horizontally, on one side of the machine. During the descent, the pins 72 were removed from the holes 73 and the head 79 of the arm 68 controlling the locking lever 66 was removed from the locking member 70 of the aforesaid arm. At the end of the descent of the rod, the head of the plate-holder tip-up lever 84 is inserted in the locking member 86 of the tip-up device which causes the holders 62 to rotate together with the old plates, from the horizontal position of figure 15 to the vertical position of figure 16, in which the plates are provided with the tools 83 facing upwards, in a horizontal plane, on their upper faces. The tipping up is actuated by the racks 87, 91 operated by the cylinder 92 or by other suitable control device. The upturned condition is signalled by the sensing means F21.

At this point, the operator can work on the plates, carrying out the necessary operations or replacing the tools.

On completion of the adjusting operations or replacing the tools, while the machine has already been put back into operation, the operator presses a special pushbutton which controls the execution of the subsequent phases which reposition the movable unit 22 supporting the plates 12, which are now fitted with new or adjusted tools, on the horizontal transfer device, in the waiting or stand position ready for the next replacement operation. In practice, the phases and operations described previously are carried out in reverse order, that is to say, rotating the plate holders 62 to a horizontal position, in the servicing station, raising the movable unit 22 by means of the rod 76, towards the horizontal transfer arm 51 in the stand position, hooking the unit 22 to the aforesaid arm and rotating the latter to the transferring position facing towards the plier-supporting head, disposing the plates with their axes parallel to the spindles of the machine and lowering the lifting rod 76, which is all controlled by the respective sensing means.

Upon completion of these operations, the entire apparatus is ready once more to replace the plates as described previously.

## Claims

1. Device for automatically changing toolplates in pipe-working machines comprising at least one spindle (13) onto which a toolplate (12) is automatically and releasably locked, said spindle (13) being supported to move from a forward working position to a rearward plate-changing position, characterized by the fact of comprising:

a movable toolplate-supporting unit (22); a first transfer device (51) for the lateral transfer of the plate-supporting unit (22), above the machine, said transfer device (51) comprising a hooking means (74) for the plate-supporting unit (22), said transfer device (51) being movable from a plate releasing position in which the plates (12) have their axes aligned with the spindles (13) of the machine, to a stand position in which the plate-supporting unit (22) is disposed on one side of the machine;

a second vertical transfer device (76) designed to receive the plate-supporting unit (22) from the horizontal transfer device (51), in said stand position and to move the plate-supporting unit (22) towards a lower servicing position, and hooking means (65) on the movable plate-supporting unit (22) to lock the latter to the first transfer device (51) and, respectively, to the second transfer device (76),

the apparatus being provided moreover with a plate-removing device (18), comprising a plier-supporting head (23) rotatingly supported and sliding along an axis parallel to the axis of the spindles (13) of the machine, and independent control means (34, 35, 38) for rotational and sliding movements of the aforesaid plier-supporting head (23).

2. Device as claimed in claim 1, characterized by the fact that the movable plate-supporting unit comprises a main body (61) and at least one plate holder (62) pivoted to the aforesaid main body (61), and control member (84) for controlling the rotation of the plate holder (62), said control member (84) engaging and disengaging during the vertical movement of the plate-supporting unit (22), with control means (86) in correspondence with the aforesaid servicing position.

3. Device as claimed in claims 1 and 2, characterized by the fact that the automatic hooking means (65) for hooking the plate-supporting unit (22) to the horizontal transfer device (61) and, respectively, to the vertical transfer device (76), comprise a rotatable hooking member (68, 65'), in said main body (61), which is engageable and disengageable with a retaining slot (67, 82) on a rotating arm of the horizontal transfer device (51) and, respectively, in a supporting head (80) of the vertical transfer device (76); said hooking member (65',

68) engaging and disengaging, during vertical displacement of the plate-supporting unit (22), with control means (70) on the rotating arm of the horizontal transfer device (51).

4. Device as claimed in claim 2, in which each toolplate (12) is provided with a tapered rear centering bush (43), characterized by the fact that the plate holder (62) comprises a tapered housing (63) for said centering bush (43), and retaining means (64) protruding within the tapered housing in the plate holder (62), said retaining means (64) being elastically biased to engage and disengage said centering bush (43).

5. Device as claimed in claim I, characterized by the fact that the horizontal transfer device (51) comprises an arm supporting the plate-supporting unit (61), said arm being around a vertical axis (52), said axis (52) being connected to control means (53, 54, 55) to rotate said arm (51) from the plate releasing position to an angularly displaced stand position, in which the toolplates (12) are oriented with their axes facing towards one side of the machine.

6. Device as claimed in claim 5, characterized by the fact that it comprises locking means (56, 59) for securing the said arm of the plate-supporting unit (51) in the aforesaid releasing and stand positions.

7. Device as claimed in claim 3, further characterized by the fact that the movable plate-supporting unit (61) comprises dowel pins (78) which fit into corresponding holes (73) in the rotating arm of the horizontal transfer device (51), and by the fact that a sliding retaining plate (74) has been provided for engaging and disengaging lateral slots in the aforesaid dowel pins (72) in said rotating plate (74) being operatively connected to said rotatable hooking member (65', 68).

8. Device as claimed in claim I, characterized by the fact that the plier-supporting head (23) of the plate removing device (18) comprises at least one plier (25) for gripping a plate (12) on a spindle (13), and at least one plier (25) for gripping a plate (12) on the horizontal transfer device (51), and control means (26, 33) for opening and closing said pliers (25) simultaneously.

9. Device as claimed in claim 8, characterized by the fact that the control means (26, 33) for the pliers (25) gripping the toolplates (12) comprise first and second sliding jaws (29) and guide means (30) for guiding the jaws (29) on the aforesaid head (23); sliding plate (33) comprising two slanting slots (32) said slots (32) engaging slide pins (31) secured to the jaws (29), and a control member (26), operatively connected to at least one of said sliding plates (33).

10. Device for automatically changing toolplates in pipe-working machines, in which at least one toolplate (12) is releasably supported on a spindle (13) of the machine, characterized by the fact of comprising: a frame (17), a moving supporting unit (22) for at least one toolplate (12) and means (51) for moving said toolplate-supporting unit (22) from a toolplate releasing position aligned with the spindles (13) of the machine, to a stand position; a toolplate removing head (23), said head being provided with at least a first and a second gripping pliers (25) for gripping aligned toolplates (12), said toolplate removing head (23) being movable on said frame (17) from a first position in which the pliers (25) are far from the toolplates (12) on the spindle (13) and, respectively, on the toolplate-supporting unit (22), to a second toolplate gripping position in which the pliers (25) are axially aligned and close to the aforesaid toolplates (12) on the spindle (13) and on the supporting unit (22) in the aforesaid releasing position; control means (26, 33) to cause the simultaneous opening and closing of said pliers (25); first control means (38) for moving the toolplate removing head (23) parallel to the axis of the spindles (13), from a gripping position in which the pliers (25) grip the toolplates (12) on the spindles (13), respectively on the movable supporting unit (51), and second control means (34, 35) for rotating the toolplate removing head (23) from a resting position to a working position in which the pliers (25) are axially aligned with the toolplates (12) to be removed.

II. Device for replacing toolplates (12) in pipe-working machines, in which the machine is provided with at least one spindle (13) comprising automatic means for engaging and releasing the toolplates (12), characterized by the fact of comprising a movable toolplate-supporting unit (22),said engageable and disengageable toolplate retaining means (62) on the aforesaid supporting unit (22); a first transfer device (76) for transferring the toolplate-supporting unit (22) from a servicing position to a stand position; a second transfer device (51) for transferring said toolplate-supporting unit (22) from said stand position to a toolplate removing position in which each toolplate is disposed above and with its axis parallel to the axis of a spindle (13) of the machine; hooking means (65) for securing the toolplate-supporting unit (22) to said first (76) and second (51) transfer devices, and control means (71) for actuating said hooking means (65) in the aforesaid stand position; the apparatus moreover comprising a means (18) for removing the toolplates from the toolplate-supporting unit (22) and, respectively, from the spindles (13) of the machine, said toolplate removing means (18) comprising a pliers-supporting head (23) movable longitudinally and rotating on an axis parallel to the spindles (l3), said head (23) comprising at least a first and a second gripping means (25) for gripping the toolplates (l2) on the spindles (l3), and, respectively, on the aforesaid toolplate-supporting unit (22), and control means (35, 38) for moving said head (23) lengthwise to its sliding axis and for making it rotate by reversing the disposition of the aforesaid pliers (25) for gripping the toolplates (l2) on the spindles (l3) and on the toolplate-supporting unit (22).

Fig. 1

0 265 649

Fig. 2

Fig. 3

83   43   44   43a  45   13   11a

12

45

F9   F8

Fig. 4

35

F3

F1

38

25   34

F2

F5

42   37

40   19   F4

25   41   23   36   39

F7

F6

25

Fig. 5

Fig. 6

Fig. 7

Fig. 8

Fig. 9

Fig. 10

Fig. 11

Fig. 12

0 265 649

Fig. 13

Fig. 14

Fig. 15

Fig. 16

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | MASCHINENMARKT, vol. 82, no. 102, 1976, pages 1987-1988, Würzburg; "Spannende Fertigungstechnik" <br> * page 1988, figure 9 * | 1,10,11 | B 23 Q 3/155 <br> B 23 B 5/16 |
| A | SOVIET INVENTIONS ILLUSTRATED, Section Mechanical, Week K26, abstract no. 63501 M23 P54, 10th August 1983, Derwent Publications Ltd., London, GB; & SU - A - 952 474 (MECH ENG TECH RES) 28-08-1982 | 1,10,11 | |
| A | GB-A-1 169 176 (AUSTIC-LAYTON) <br> * page 2, right-hand column, lines 105-125; claims 1-2, figure 3 * | 1,10,11 | |
| A | FR-A-2 366 097 (RATIER-FOREST et al.) <br> * claims 1-6; figures 1-2 * | 1,10,11 | |
| A | DE-U-7 027 770 (EISEN- U. METALL. FERNDORF) <br> * page 1, line 11 - page 2, line 5; figure 1 * | 1,10,11 | TECHNICAL FIELDS SEARCHED (Int. Cl.4) |
| A | DE-A-1 752 812 (VEB FRITZ-HECKERT) <br> * claim 1, figure 2 * | 1,10,11 | B 23 B 5/16 <br> B 23 Q 3/155 <br> B 23 C 3/12 |

The present search report has been drawn up for all claims

| Place of search | Date of completion of the search | Examiner |
|---|---|---|
| BERLIN | 28-12-1987 | BERNAS Y.N.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)